# EUROPEAN PATENT SPECIFICATION

(11) **EP 2 929 770 B1**
(45) Date of publication and mention of the grant of the patent: **24.05.2017**
(21) Application number: 15162184.4
(22) Date of filing: 01.04.2015
(51) Int. Cl.: A01C 23/04, B60P 3/22

(54) **PUMP CRANE WITH DOUBLE PIPING**
PUMPKRAN MIT DOPPELTER VERROHRUNG
GRUE À POMPE AVEC TUBULURE DOUBLE

(30) Priority: 09.04.2014 DK 201400207
(43) Date of publication of application: 14.10.2015
(73) Proprietor: Sørensen, Harry Højvang, 6818 Årre (DK)
(72) Inventor: Sørensen, Harry Højvang, 6818 Årre (DK)
(74) Representative: Carlsen, Bjarne

(56) References cited:
- EP-A1- 1 752 033
- AT-B- 291 650
- DE-A1- 2 707 394
- DE-U1- 8 608 467
- FR-A1- 2 563 963
- FR-A1- 2 965 143

## Description

The present invention relates to a pump crane with double piping, primarily for use on slurry wagons and trailers.

### Background of the invention

Self-loading slurry wagons and trailers are commonly known. Usually, they have a crane arm arranged along the longitudinal direction of the vehicle. This crane arm comprises one or more slurry hoses connecting a pump head arranged at the end of the crane arm to the tank of the vehicle, so that this tank can be filled with or emptied for slurry, for instance from or to a storage tank, by means of one or more pumps arranged within the pump head.

A known disadvantage of such crane arms is that the hosing limits the flexibility of the arm.

Typically, one or more extendable joints are used in order to obtain a larger operating area. In order to prevent rotation of the extendable joints, profiled pipes with non-circular cross-sectional profiles are used. It is difficult to obtain tight connections, where such pipes are arranged to slide within each other.

FR 2563963 A1 shows such a pump crane with a plurality of intermediate parts connected by knuckle joints, a piping from the slurry wagon to a hydraulic pump head at the outermost end of the crane arm, means for bending, raising, lowering, unfolding and folding the crane arm and means for pumping slurry through the piping to or from the pump head, wherein an intermediate part comprises a telescopic joint so that the length of this telescopic joint can be varied.

Covered storage tanks often have a limited opening at the top, through which the pump head must be entered. Due to limited reach and flexibility of the crane arm, this means that often it is necessary to move the vehicle when unfolding and folding the crane in order to position the pump head correctly.

The crane arm may also comprise an overflow pipe, popularly known as a "burp pipe", often consisting in a more or less loose hanging hose continuing into the slurry tank of the vehicle to the highest area therein. In a slurry wagon, this area is typically near the rear end of the tank, whereas in a truck trailer for transporting slurry, it is typically near the front end of the tank. This overflow pipe is also used for exhaust and intake of air when the slurry tank of the vehicle is filled and emptied, respectively.

### Brief description of the invention

It is an object of the present invention to provide a pump crane, which at least partly overcomes the above-mentioned disadvantages of the known solutions within the art.

The invention relates to a pump crane for filling and emptying a slurry wagon or trailer, which pump crane is mounted on the slurry wagon or trailer by means of a turntable and comprises a crane arm with a plurality of intermediate parts connected by knuckle joints, a piping from the turntable to a hydraulic pump head arranged at the outermost end of the crane arm, means for swinging, raising, lowering, unfolding and folding the crane arm, and means for pumping slurry through the piping to or from the pump head, wherein one or more of the intermediate parts comprise telescopic joints so that the length of this or these intermediate parts can be varied, wherein the piping from the turntable to the pump head is double, and wherein solid pipe sections forming part of the piping and having substantially circular cross-sections, constitute the supporting part of the telescopic joints.

Thus, the invention differs from known solutions as for instance described in
FR 2563963 A1 among other things in that a double piping is used, in which solid pipes forming part of the piping and having substantially circular cross-sections constitute the supporting part of the telescopic joints.

In solutions known in the art, a single piping is used in the telescopic joint, which means that the pipes used must have a non-circular cross-sectional profile in order to avoid rotation of the crane arm within the telescopic joint. By using a double piping in the telescopic joint, the two parallel pipes ensure that the crane arm cannot rotate in the telescopic joint. This means the pipes with a circular cross-sectional profile can be used. It is much easier and simpler to obtain an effective tightening between two circular pipes sliding within each other than between two pipes with non-circular cross-sectional profiles sliding within each other.

In an embodiment of the invention, the double piping is led into a tower by means of a swivel, the tower being connected to the main part of the slurry wagon or trailer by means of the turntable.

In this way, it is possible to obtain a liquid-tight pivotal connection between the piping of the crane arm and the main part of the slurry wagon or trailer.

In an embodiment of the invention, an overflow pipe passes through the tower from the tank of the slurry wagon or trailer to the crane arm of the pump crane.

Hereby the loose hose, which normally constitute the overflow pipe in the transition from the main part of the slurry wagon or trailer to the crane arm, is avoided.

In an aspect of the invention, it relates to a slurry wagon or trailer comprising a pump crane as described above.

### The drawing

A few exemplary embodiments of the invention are described in more detail in the following with reference to the drawing, of which
- Fig. 1: illustrates a slurry wagon according to an embodiment of the invention as seen obliquely from above with the crane arm in the transport position,
- Fig. 2: shows a cross-section of the same slurry wagon as seen from the side,
- Fig. 3A: illustrates the slurry wagon as seen from the front with the crane arm in a partly unfolded position,
- Fig. 3B: illustrates a part of the slurry wagon as seen obliquely from above with the crane arm in the same position as shown in Fig. 3A,
- Fig. 3C: shows an enlarged cross-section of a part of Fig. 3A,
- Fig. 4A: illustrates the slurry wagon as seen from the front with the crane arm in a lowered and fully extended position, and
- Fig. 4B: illustrates a part of the slurry wagon as seen obliquely from above with the crane arm in the same position as shown in Fig. 4A.

### Detailed description of the invention

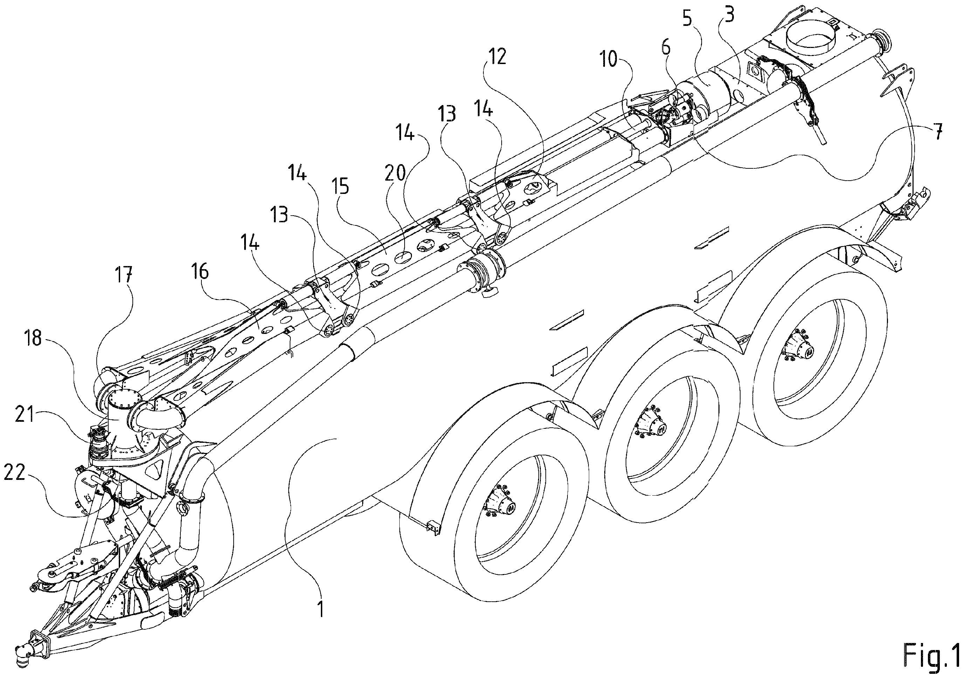

Fig. 1 illustrates a slurry wagon 1 according to an embodiment of the invention as seen obliquely from above with the crane arm of the pump crane in the transport position along the upper side of the slurry wagon 1. The piping of the pump crane is connected to the main part of the slurry wagon 1 by means of a tower 18, which is mounted on a turntable arranged on a console 22 at the front of the slurry wagon 1 along with an oil motor 21 for swinging the pump crane. From this point, the pump crane extends backwards along the slurry wagon 1 ending in a pump head 5, which, in the illustrated transport position, rests in a waste tray 3 with inlet to the tank of the slurry wagon 1. In other embodiments of the invention, the orientation of the system can be reversed, so that the console 22 is instead mounted at the rear end of the vehicle 1 and the pump crane extends forward in the transport position.

In the illustrated embodiment, the turntable is designed as a tower 18 with a swivel 17 on each side. Since there are no hose connections, it is possible to obtain an upward and downward rotation of the innermost intermediate part 16 of the crane arm of up to 100° by means of actuators.

A double piping is used all the way from the tower 18 through a swivel 17 and further through an innermost 16, a mid-most 15 and an outermost 12 intermediate part of the crane arm connected by two knuckle joints 13 to the pump head 5. Between the outermost intermediate part 12 and the pump head 5 is arranged a 45° knuckle joint 7 providing the pump crane with further flexibility. In the same area is arranged an oil motor 6 for driving the hydraulic pump head 5.

In the illustrated embodiment, a low constructional height of the pump crane can be obtained, and the overflow pipe 19 is well protected between the double piping in the full length of the pump crane. The same goes for the necessary hydraulic hoses 20 for driving the pump crane.

In the intermediate parts 12, 15, 16 of the crane arm, the double piping consists of solid parallel pipe sections constituting essential supporting parts of the construction of the intermediate parts 12, 15, 16. Between these solid pipe sections, i.e. through the knuckle joints 13, the double piping consists of flexible slurry hoses 8. This means that, if a slurry hose 8 is damaged, only a short piece (typically about 1 meter) needs to be replaced, whereas, in known constructions, the whole slurry hose 8 extending in the full length or at least most of the length of the crane arm must be replaced, which is not only expensive but also rather cumbersome.

The double-hinged construction of the knuckle joints 13 with different pivot points 14 for the two intermediate parts 12, 15, 16 of the crane arm being connected by the knuckle joint 13 results in a changed shape of the arching of the slurry hoses 8 as compared to other hinged joints known in the art. This means that the slurry hose 8 extends in a natural arch through the knuckle joint 13 contrary to the well-known compression of the hose 8 known from known solutions in the art, often resulting in a bend or a collapse of the hose 8. Apart from protecting the slurry hoses 8, this construction of the knuckle joints 13 also results in a better angle of traction for the hydraulic cylinders controlling the bending of the knuckle joints 13 and in a smaller bending radius of the crane arm for similar slurry hose 8 dimensions as compared to other known constructions.

The outermost intermediate part 12 of the crane arm comprises a telescopic joint 9 driven by a piston 10 so that the length of the outermost intermediate part 12 can be varied. The use of a double piping with two solid parallel pipe sections prevents rotation of the telescopic joint 9. This means that, contrary to known constructions, in which there is only one pipe in the telescopic joint, the pipes do not need to have non-circular cross-sectional profiles in order to prevent such a rotation. The use of pipes with circular cross-sectional profiles makes it much easier to obtain an effective tightening between the pipes sliding into each other, than is the case with pipes with non-circular cross-sectional profiles as are used in solutions known in the art.

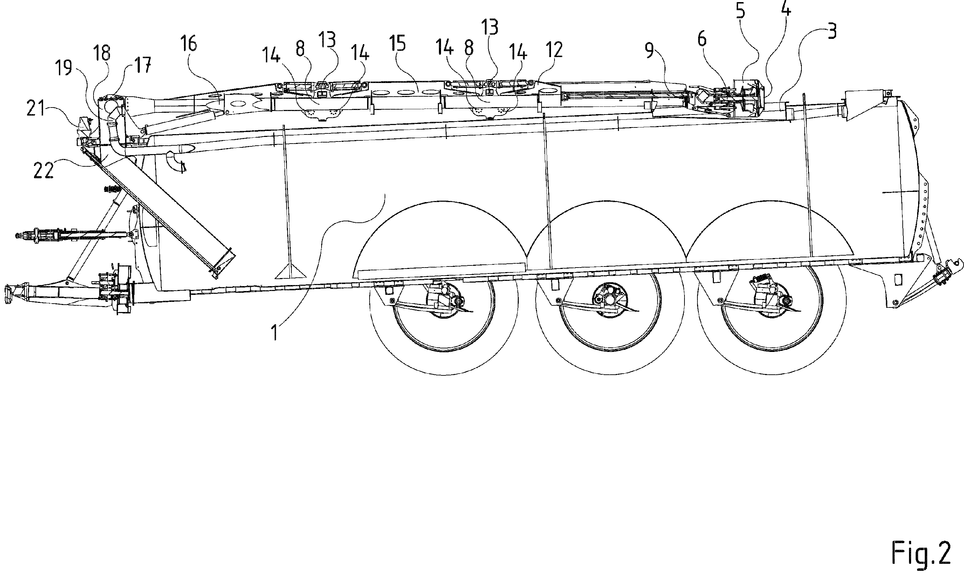

Fig. 2 shows a cross-section of the same slurry wagon 1 as seen from the side. In this figure, it is more clearly seen, how relatively short pieces of flexible slurry hose 8 connect the solid pipe sections in the neighbouring intermediate parts 12, 15, 16 through the knuckle joints 13 connecting them. Furthermore, it is seen how the overflow pipe 19 extends from the interior of the slurry wagon 1 through the tower 18 and further out to the crane arm, from where it is typically continued in the form of a hose to the pump head 5.

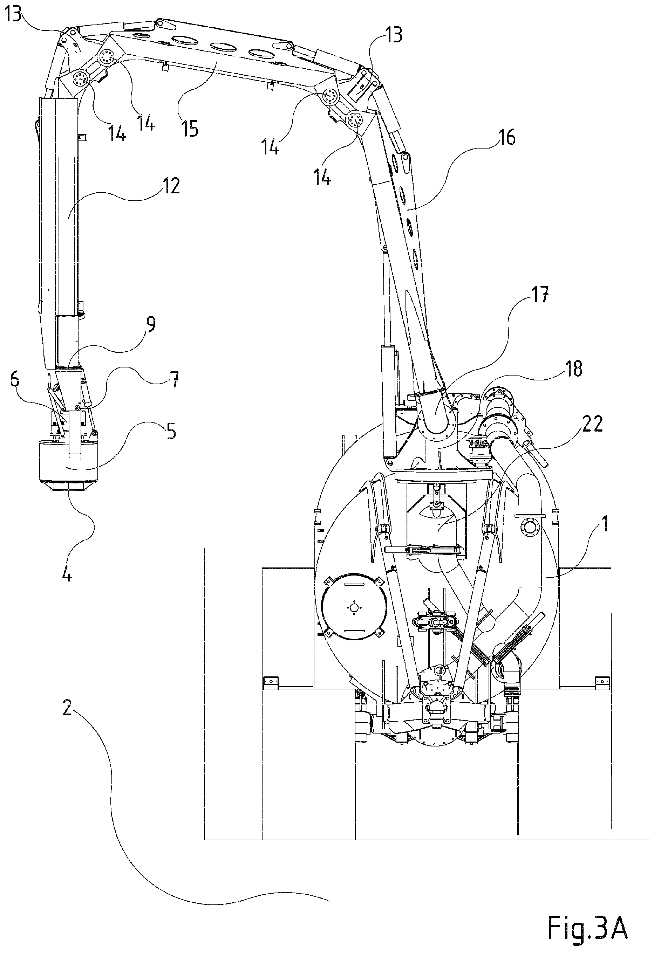

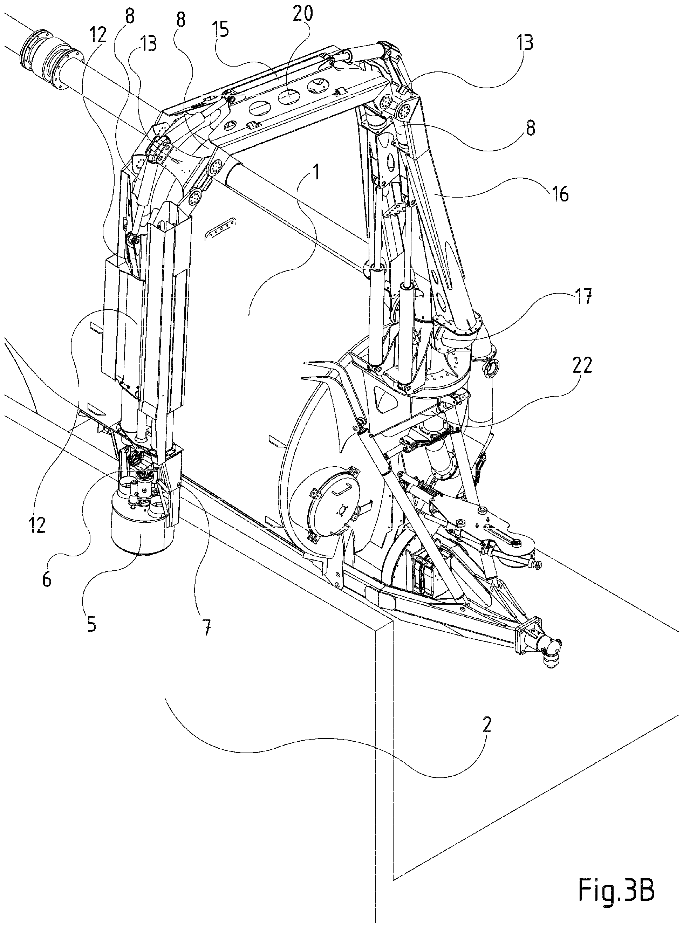

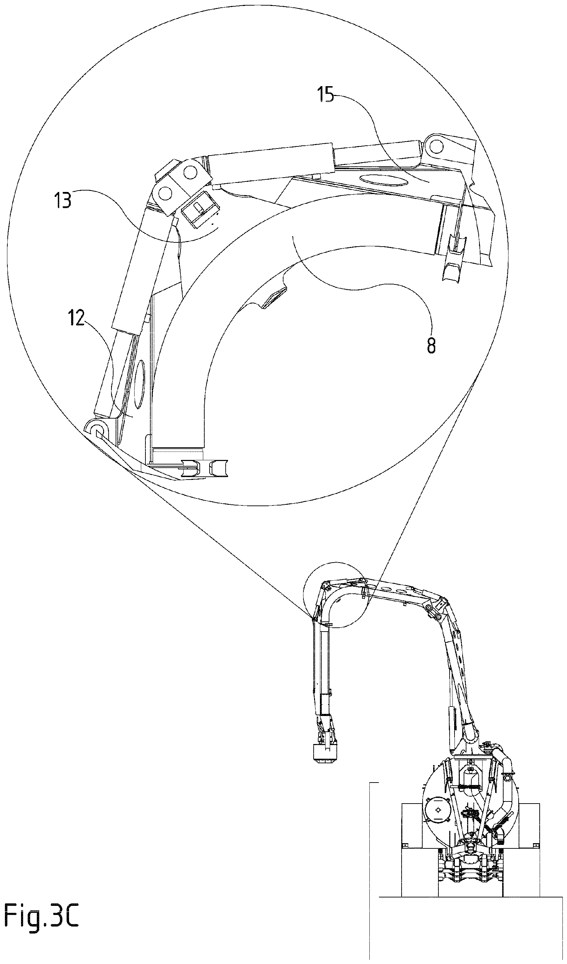

Figs. 3A-3C illustrate a slurry wagon 1 according to an embodiment of the invention as seen from the front and obliquely from above, respectively, with the crane arm in a partly unfolded position. It is shown schematically how the slurry wagon 1 is parked so that the pump head 5 is placed over a slurry storage tank 2, ready for being lowered into it. These figures illustrate the flexibility of the pump crane when it, as shown, has been rotated in the turntable under the tower 18 as well as in the swivel 17 connecting the double piping to the tower 18 and has also been bent in both of the two double-hinged knuckle joints 13. Apart from this, there is a telescopic joint 9, which is fully contracted in these figures, and a 45° knuckle joint 7 immediately before the pump head 5, which has also not been used in these figures.

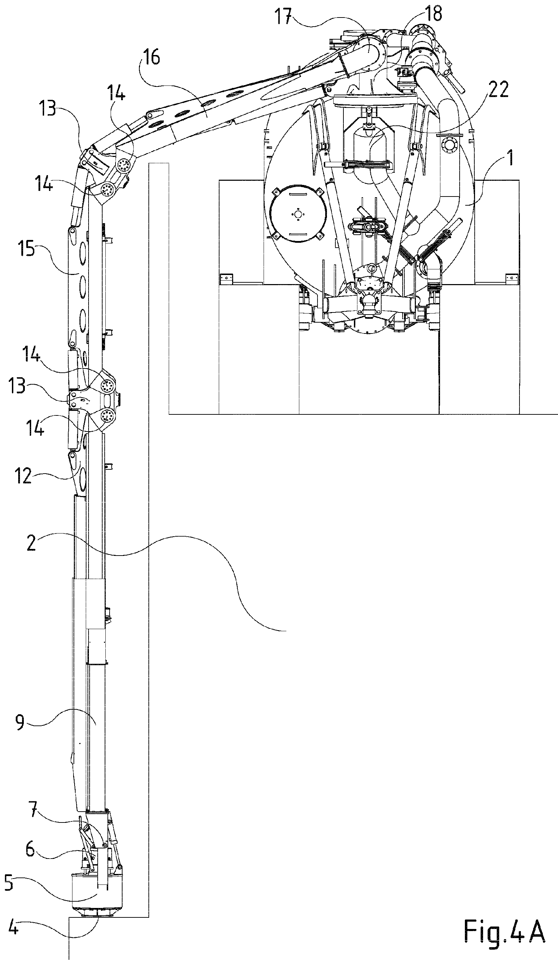

Figs. 4A og 4B illustrate the slurry wagon 1 as seen from the same angles as in

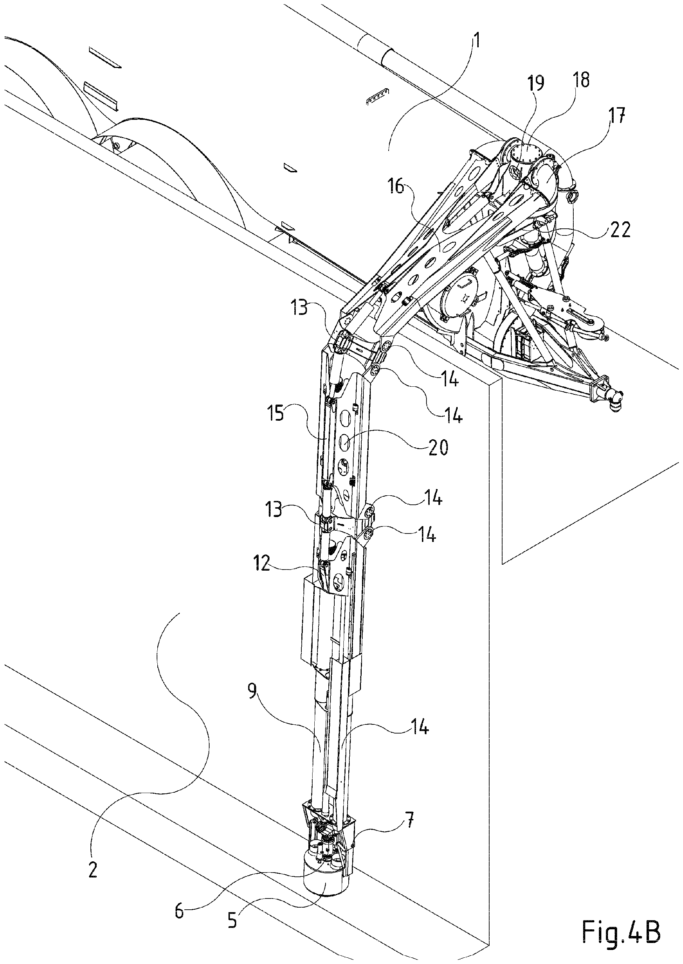

Figs. 3A og 3B, but with the crane arm in a lowered and fully extended position. These figures illustrate the flexibility of the crane arm even further, and it is seen that the pump crane is capable of reaching very deep down, typically about 6 meters, into a storage tank 2 or similar, when the telescopic joint 9 is in its most extended position. In Fig. 4B, the cabling for the telescopic joint 9 is illustrated schematically.

Figs. 3A og 4A illustrate schematically how the pump head 5 at its inlet can be provided with so-called slide valves 4. By using a so-called free-wheeling pump and suitably inserted valves, it can be obtained that slurry can by pumped in both directions through the piping, i.e. into as well as out of the tank of the slurry wagon 1.

### List of reference numbers

1. Slurry wagon or trailer
2. Slurry storage tank
3. Waste tray with inlet to tank
4. Slide valve at inlet to pump head
5. Pump head
6. Oil motor for pump head
7. 45° knuckle joint
8. Flexible slurry hose
9. Telescopic joint with to pipes
10. Piston for extension of telescopic joint
11. Cabling for telescopic joint
12. Outermost intermediate part with two pipes
13. Double-hinged knuckle joint
14. Pivot point for knuckle joint
15. Mid-most intermediate part with two pipes
16. Innermost intermediate part with two pipes
17. Swivel with double piping
18. Tower with turntable, two inlets and overflow pipe
19. Overflow pipe in tower
20. Hydraulic hoses
21. Oil motor for swinging the crane
22. Console on vehicle

## Claims

1. A pump crane for filling and emptying a slurry wagon or trailer (1), which pump crane is mounted on the slurry wagon or trailer by means of a turntable and comprises a crane arm with
a plurality of intermediate parts (12, 15, 16) connected by knuckle joints (13),
a piping from the turntable to a hydraulic pump head (5) arranged at the outermost end of the crane arm,
means for swinging, raising, lowering, unfolding and folding the crane arm, and means for pumping slurry through the piping to or from the pump head,
wherein one or more of the intermediate parts comprise telescopic joints (9) so that the length of this or these intermediate parts can be varied,
wherein the piping from the turntable to the pump head is double, and
wherein solid pipe sections forming part of the piping and having substantially circular cross-sections, constitute the supporting part of the telescopic joints.

2. The pump crane according to claim 1, wherein the double piping is led into a tower (18) by means of a swivel (17), the tower being connected to the main part of the slurry wagon or trailer by means of the turntable.

3. The pump crane according to claim 2, wherein an overflow pipe (19) passes through the tower from the tank of the slurry wagon or trailer to the crane arm of the pump crane.

4. A slurry wagon or trailer (1) comprising a pump crane according to any of the preceding claims.

## Patentansprüche

1. Pumpkran zum Füllen und Leeren eines Schlammwagens oder -anhängers (1), wobei der Pumpkran an dem Schlammwagen oder -anhänger mittels einer Drehplatte montiert ist und einen Kranarm umfasst mit:
einer Mehrzahl von Zwischenteilen (12, 15, 16), die durch Winkelgelenke (13) verbunden sind,
einer Verrohrung von der Drehplatte zu einem Hydraulikpumpkopf (5), der am äußersten Ende des Kranarms angeordnet ist,
Mittel zum Schwenken, Heben, Senken, Auseinanderklappen und
Zusammenklappen des Kranarms, und
Mittel zum Pumpen von Schlamm durch die Verrohrung zu oder von dem Pumpkopf,
wobei ein oder mehrere der Zwischenteile teleskopische Gelenke (9) umfassen, so dass die Länge dieses/r einen oder mehreren Zwischenteils/e variiert werden kann,
wobei die Verrohrung von der Drehplatte zum Pumpenkopf doppelt ist, und
wobei feste Rohrsektionen Teil der Verrohrung bilden und im Wesentlichen kreisförmige Querschnitte haben und den tragenden Teil der teleskopischen Gelenke bilden.

2. Pumpkran nach Anspruch 1, wobei die doppelte Verrohrung in einen Turm (18) über ein Drehgelenk (17) führt, wobei der Turm mit dem Hauptteil des Schlammwagens oder -anhängers über die Drehplatte verbunden ist.

3. Pumpkran nach Anspruch 2, wobei ein Überlaufrohr (19) durch den Turm vom Tank des Schlammwagens oder -anhängers zum Kranarm des Pumpkrans verläuft.

4. Schlammwagen oder -anhänger (1), der einen Pumpkran nach einem der vorherigen Ansprüche umfasst.

## Revendications

1. Grue à pompe pour remplir et vider une citerne ou une remorque à lisier (1), cette grue à pompe étant montée sur la citerne ou la remorque à lisier au moyen d'une plate-forme tournante et comprenant un bras de grue avec
une pluralité de parties intermédiaires (12, 15, 16) raccordées par des raccords à genouillère (13),
une tubulure allant de la plate-forme tournante à une tête de pompe hydraulique (5) agencée au niveau de l'extrémité située le plus à l'extérieur du bras de grue,
des moyens pour faire pivoter, relever, abaisser, déployer et replier le bras de grue, et
des moyens pour pomper le lisier à travers la tubulure vers la tête de pompe, ou à partir de cette dernière,
cas dans lequel une ou plusieurs des parties intermédiaires comportent des raccords télescopiques (9) de sorte que la longueur de cette partie ou de ces parties intermédiaires peut être variée,
cas dans lequel la tubulure à partir de la plate-forme tournante vers la tête de pompe est double, et
cas dans lequel des sections de conduite solides faisant partie de la tubulure et présentant des sections transversales sensiblement circulaires, constituent la partie de support des raccords télescopiques.

2. Grue à pompe selon la revendication 1, la tubulure double étant acheminée dans une tourelle (18) au moyen d'une rotule (17), la tourelle étant raccordée à la partie principale de la citerne ou de la remorque à lisier au moyen de la plate-forme tournante.

3. Grue à pompe selon la revendication 2, une conduite de trop-plein (19) passant à travers la tourelle à partir du réservoir de la citerne ou de la remorque à lisier vers le bras de grue de la grue à pompe.

4. Citerne ou remorque à lisier (1) comprenant une grue à pompe selon l'une quelconque des revendications précédentes.
